(19) Europäisches Patentamt / European Patent Office / Office européen des brevets

(11) **EP 4 112 695 B1**

(12) **EUROPEAN PATENT SPECIFICATION**

(45) Date of publication and mention
of the grant of the patent:
**21.01.2026 Bulletin 2026/04**

(21) Application number: **22181741.4**

(22) Date of filing: **29.06.2022**

(51) International Patent Classification (IPC):
*C09D 11/54* (2014.01)    *C09D 11/102* (2014.01)
*C09D 11/38* (2014.01)    *C09D 11/40* (2014.01)
*C09D 11/322* (2014.01)    *D06P 5/30* (2006.01)

(52) Cooperative Patent Classification (CPC):
**C09D 11/54; C09D 11/102; C09D 11/322;
C09D 11/38; C09D 11/40; D06P 1/44; D06P 1/5278;
D06P 1/5285; D06P 1/54; D06P 5/225; D06P 5/30**

(54) **TREATMENT LIQUID COMPOSITION, SET OF INK JET INK COMPOSITION AND TREATMENT LIQUID COMPOSITION, AND TREATMENT METHOD**

BEHANDLUNGSFLÜSSIGKEITSZUSAMMENSETZUNG, SATZ VON TINTENSTRAHLTINTENZUSAMMENSETZUNG UND BEHANDLUNGSFLÜSSIGKEITSZUSAMMENSETZUNG SOWIE BEHANDLUNGSVERFAHREN

COMPOSITION LIQUIDE DE TRAITEMENT, ENSEMBLE COMPOSÉ D'UNE COMPOSITION D'ENCRE POUR JET D'ENCRE ET D'UNE COMPOSITION LIQUIDE DE TRAITEMENT ET PROCÉDÉ DE TRAITEMENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.06.2021 JP 2021108747**

(43) Date of publication of application:
**04.01.2023 Bulletin 2023/01**

(73) Proprietor: **Seiko Epson Corporation**
**Tokyo 160-8801 (JP)**

(72) Inventors:
• **OKADA, Hideki**
**Suwa-shi, 392-8502 (JP)**
• **YAMADA, Akiko**
**Suwa-shi, 392-8502 (JP)**

(74) Representative: **Lewis Silkin LLP**
**Arbor**
**255 Blackfriars Road**
**London SE1 9AX (GB)**

(56) References cited:
EP-A2- 2 614 964        WO-A1-2012/023629
US-A- 6 001 137         US-A1- 2011 050 795
US-A1- 2012 092 413

**Description**

The present application is based on, and claims priority from JP Application Serial Number 2021-108747, filed June 30, 2021.

BACKGROUND

1. Technical Field

The present disclosure relates to a treatment method including a liquid composition, a set of an ink jet ink composition and a treatment liquid composition.

2. Related Art

An ink jet recording method is a recording method including ejecting droplets of an ink jet ink composition (also referred to as an "ink" hereinafter) from fine nozzles and adhering the droplets to a recording medium. When an image is formed by ejecting an ink to a recording medium by an ink jet recording method, there has been known a technique of pre-treating the recording medium with a treatment liquid composition containing an aggregating agent in order to improve color development and the like of a recorded mater.

For example, JP-A-2021-020394 describes a treatment liquid composition containing a water-soluble cationic polymer, which is produced by reacting a monomer containing amine and epihalohydrin, a nonionic resin, an organic solvent, and water. Additionally, US 6001137 might be cited.

However, it is difficult to achieve both excellent color development and excellent wet friction fastness with little discoloration even during wet friction.

SUMMARY

According to an aspect of the present disclosure, a treatment method as set out in the appended set of claims.

According to an aspect of the present disclosure, a set of an ink jet ink composition and a treatment liquid composition includes an ink jet ink composition and the treatment liquid composition according to the aspect of the present disclosure described above. The ink jet ink composition is an aqueous pigment ink jet ink containing pigment particles and resin particles, the ink composition has a pH of over 8, and the particle components contained have a volume-average particle diameter of 20 to 500 nm.

DESCRIPTION OF EXEMPLARY EMBODIMENTS

The present disclosure is described below.

1. Treatment liquid composition

A treatment liquid composition according to an embodiment of the present disclosure contains a polyamide epihalohydrin polymer and a quaternary ammonium salt polymer other than the polyamide epihalohydrin polymer.

The configuration described above can achieve excellent color development and excellent wet friction fastness with little discoloration even during wet friction.

When an image is formed by an ink on a recording medium such as a fabric or the like, it has been difficult to achieve both high color development and fastness (particularly discoloration and washing resistance during wet friction). This is because an ink solid content is required to remain near the surface of the recording medium in order to improve color development, but when the ink solid content remains near the surface of the recording medium, the ink is easily peeled off by friction or the like and thus fastness easily deteriorates. In addition, color development can be easily controlled by a polyvalent metal salt generally used as an aggregating agent because of improvement in aggregation reactivity with the component in the ink depending on the amount of the metal salt, but a crystal product may be formed near the surface of the recording medium. The crystal product is easily dissolved in water, and when the recording medium is wet with water, the crystal product present near the surface is dissolved out, thereby hollowing a portion where the crystal product is present. The hollowed portion easily becomes a starting point of the occurrence of ink peeling, and thus the treatment liquid using the polyvalent metal salt is easily degraded in wet friction fastness. When the crystal product is present on a recorded matter, it appears as a white stain on the printing surface, and a whitening phenomenon also becomes a problem.

On the other hand, the treatment liquid composition according to the present embodiment has a configuration using the quaternary ammonium salt polymer other than the polyamide epihalohydrin polymer, but not using the polyvalent metal salt. For example, when the recording medium is a fabric, the quaternary ammonium salt polymer is coated on the fiber surface of the fabric and has excellent aggregation reactivity of the ink in contact with the fiber surface and high color development performance, and unlike the polyvalent metal salt, the crystal product is not produced, thereby easily maintaining wet friction fastness. Further, the treatment liquid composition according to the present embodiment has a configuration using the polyamide epihalohydrin polymer. The polyamide epihalohydrin polymer has the function of enabling swelling due to containing of water in the fibers to be decreased by bonding of an amide portion or the like in the structure thereof to a hydroxyl group of fibers of the fabric, thereby improving water resistance. Also, it has the function of improving the structural strength by crosslinking of the epihalohydrin portion, and thus can improve wet friction fastness. As described above, the treatment liquid composition according to the present embodiment has a configuration containing the quaternary ammonium salt polymer other than the polyamide epihalohydrin polymer and the polyamide epihalohydrin polymer, and thus both excellent color development and excellent wet friction fastness can be achieved.

Each of the components contained in the treatment liquid composition according to the present embodiment and components which can be contained therein are described below.

1. 1. Polyamide epihalohydrin polymer

The treatment liquid composition according to the present embodiment contains the polyamide epihalohydrin polymer.

The polyamide epihalohydrin polymer is a polymer produced by polymerizing a monomer containing amine and epihalohydrin. Examples of the polyamide epihalohydrin polymer include a polyamine-epihalohydrin copolymer, a polyamide-epihalohydrin copolymer, a polyamide-polyamine-epihalohydrin copolymer, an amine-epihalohydrin copolymer, and the like. These polymers can be produced by a known method such as a method of polymerizing a monomer containing amine and epihalohydrin, a method of graft-polymerizing polyamide, produced by polymerizing a monomer containing amine and carboxylic acid, with a monomer containing epihalohydrin, or the like.

The epihalohydrin contains a halogen atom in the structure thereof. Examples of the halogen atom include F, Cl. Br, I, and the like. Among these halogen atoms, Cl is preferred, and thus the epihalohydrin is preferably epichlorohydrin. Therefore, the polyamide epihalohydrin polymer is preferably a polyamide epichlorohydrin polymer. Specifically, preferred are a polyamine-epichlorohydrin copolymer, a polyamide-epichlorohydrin copolymer, a polyamide polyamine-epichlorohydrin copolymer, and an amine-epichlorohydrin copolymer, and among these, the polyamide-epichlorohydrin copolymer is more preferred.

Examples of commercial products of the polyamide epihalohydrin polymer include WS-4020, 4030, 4027, and TS-4070 (manufactured by Seiko PMC Corporation, polyamide-epichlorohydrin polymer), WS-4011 (manufactured by Seiko PMC Corporation, polyamine-epichlorohydrin polymer), AF-100, 251S, 255, 255LOX, and 2500 (manufactured by Arakawa Chemical Industries, Ltd., polyamide polyamine-epichlorohydrin polymer), Catiomaster PE-30 (manufactured by Yokkaichi Chemical Co., Ltd., dimethylamine-ethylenediamine-epichlorohydrin condensate), EPA-SK01 (manufactured by Yokkaichi Chemical Co., Ltd., polyamide polyamine-epichlorohydrin condensate), and the like.

The polyamide epihalohydrin polymers may be used alone or in combination of two or more.

The weight-average molecular weight of the polyamide epihalohydrin polymer is preferably 10,000 to 5,000,000, more preferably 100,000 to 5,000,000, still more preferably 500,000 to 5,000,000, and particular preferably 1,000,000 to 5,000,000. When the weight-average molecular weight of the polyamide epihalohydrin polymer is within the range described above, wet friction fastness may be more improved.

The content of the polyamide epihalohydrin polymer relative to the total mass of the treatment liquid composition is preferably 0.10% by mass or more, more preferably 0.30% by mass or more, still more preferably 0.50% by mass or more, and particularly preferably 0.70% by mass or more. The content of the polyamide epihalohydrin polymer relative to the total mass of the treatment liquid composition is preferably 5.0% by mass or less, more preferably 3.0% by mass or less, still more preferably 1.5% by mass or less, and particularly preferably 1.2% by mass or less. When the content of the polyamide epihalohydrin polymer is within the range described above, there is a tendency that the color development, friction fastness such as dry friction fastness and wet friction fastness, texture, and light resistance can be improved with good balance.

1. 2. Specific quaternary ammonium salt polymer

The treatment liquid composition according to the present embodiment contains the quaternary ammonium salt polymer (also referred to as the "specific quaternary ammonium salt polymer" hereinafter) other than the polyamide epihalohydrin polymer.

The specific quaternary ammonium salt polymer is, for example, a polymer being insoluble in water and having one or more quaternary ammonium salts in a chain constituting the repeat unit of the polymer, but not having a halohydrin structure such as a chlorohydrin structure or the like.

Examples of the specific quaternary ammonium salt polymer include poly(2-hydroxy-3-methacryloxypropyltrimethyl ammonium chloride), poly(2-hydroxy-3-methacryloxypropyltriethyl ammonium chloride), poly(2-hydroxy-3-acryloxypropyltrimethyl ammonium chloride), poly(2-hydroxy-3-acryloxypropyltriethyl ammonium chloride), poly(2-methacryloxyethyltrimethyl ammonium chloride), poly(2-methacryloxyethyltriethyl ammonium chloride), poly(2-acryloxyethyltrimethyl ammonium chloride), poly(2-acryloxyethyltriethyl ammonium chloride), a salt of poly(dimethylaminoethyl methacrylate), a salt of poly(diethylaminoethyl methacrylate), a salt of poly(diethylaminoethyl acrylate), a salt of poly(dimethylaminoethyl methacrylate), a salt of poly(dimethylaminoethyl acrylate), poly(4-vinyl-N-methylpyridinium chloride), N,N-dimethyl-substituted 3,5-methylpiperidinium chloride resin, poly(dimethyldiallyl ammonium chloride), poly(diethyldiallyl ammonium chloride) polyethyleneimine hydrochloride, and the like.

A commercial product can also be used as the specific quaternary ammonium salt polymer, and examples thereof include PAS-H-1L, PAS-H-5L, PAS-H-10L; PAS-24; PAS-2401; PAS-A-1, PAS-A-5; PAS-J-81L, PAS-J-81, and PAS-J-4 1 (manufactured by Nittobo Medical Co., Ltd.), EP-1137 (manufactured by Takamatsu Oil & Fat Co., Ltd.), Papiogen P-105 and Milliogen P-20 (manufactured by Senka Co., Ltd.), and the like.

The specific quaternary ammonium salt polymers may be used alone or in combination of two or more.

The content of the specific quaternary ammonium salt polymer relative to the total mass of the treatment liquid composition is preferably 0.10% by mass or more, more preferably 0.30% by mass or more, still more preferably 0.50% by mass or more, and particularly preferably 0.70% by mass or more. The content of the specific quaternary ammonium salt polymer relative to the total mass of the treatment liquid composition is preferably 5.0% by mass or less, more preferably 3.0% by mass or less, still more preferably 1.5% by mass or less, and particularly preferably 1.2% by mass or less. When the content of the specific quaternary ammonium salt polymer is within the range described above, there is a tendency that the color development, friction fastness such as dry friction fastness and wet friction fastness, texture, and light resistance can be improved with good balance.

1. 3. Cationic polymer other than the above

The treatment liquid composition according to the present embodiment may contain a cationic polymer other than the polyamide epihalohydrin polymer and the specific quaternary ammonium salt polymer described above. The cationic polymer is, for example, a polymer having, in the polymer structure, a cationic functional group selected from a primary amino group, a secondary amino group, a tertiary amino group, an imino group, and an amide group, but not having a quaternary ammonium salt and a halohydrin structure such as a chlorohydrin structure or the like.

1. 4. Solvent

Water

The treatment liquid composition according to the present embodiment preferably contains water as a solvent. The water may be a main solvent in the treatment liquid composition and is a component evaporated and scattered by drying. Examples of the water include water from which ionic impurities are removed as much as possible, such as pure water such as ion exchange water, ultrafiltered water, reverse osmosis water, distilled water, and the like, and ultrapure water. In addition, the use of water sterilized by ultraviolet irradiation, addition of hydrogen peroxide, or the like can prevent the occurrence of mold and bacteria when the treatment liquid composition is stored for a long period of time.

The content of the water is not particularly limited, but the content relative to the total mass of the treatment liquid composition may be, for example, 50% by mass or more, 60% by mass or more, or 70% by mass or more. The upper limit of the content of water contained in the treatment liquid composition may be 99% by mass or less, 98% by mass or less, or 97% by mass or less.

Water-soluble organic solvent

The treatment liquid composition according to the present embodiment may contain a water-soluble organic solvent as a solvent.

Examples of the water-soluble organic solvent include a polyol compound, a glycol ether, a betaine compound, and the like.

The polyol compound is, for example, a polyol compound (preferably a diol compound) having 2 or more and 6 or less carbon atoms in its molecule and having one ether bond in its molecule, or the like. Specific examples thereof include 1,2-pentanediol, methyl triglycol (triethylene glycol monomethyl ether), butyl triglycol (triethylene glycol monobutyl ether), trimethylolpropane, butyl diglycol (diethylene glycol monobutyl ether), dipropylene glycol monopropyl ether, glycerin, 1,2-hexanediol, 1,2-heptanediol, 1,3-propanediol, 1,2-butanediol, 1,3-butanediol, 1,4-butanediol, 2,3-butanediol, 2-methyl-3-pheoxy-1,2-propanediol, 3-(3-methylphenoxy)-1,2-propanediol, 3-hexyloxy-1,2-propanediol, 2-hydroxymethyl-2-phenoxymethyl-1,3-propanediol, 3-methyl-1,3-butanediol, 1,3-propanediol, 1,2-pentanediol, 1,5-pentanediol, 1,6-hexanediol, 2-methyl-2,4-pentanediol, 3-methyl-1,5-pentanediol, and the like.

For example, the glycol ether is preferably glycol monoalkyl ether selected from ethylene glycol, diethylene glycol, triethylene glycol, polyethylene glycol, propylene glycol, dipropylene glycol, tripropylene glycol, polypropylene glycol, and polyoxyethylene polyoxypropylene glycol. More preferred are triethylene glycol monomethyl ether, triethylene glycol monobutyl ether, dipropylene glycol monopropyl ether, and the like.

The betaine compound is a compound (intramolecular salt) having positive charge and negative charge at positions not adjacent to each other in the same molecule, but not having a dissociable hydrogen atom bonded to an atom having positive charge, and thus not having charge as a whole in the molecule. The betaine compound is preferably a N-alkyl substituted amino acid and more preferably a N-trialkyl substituted amino acid. Examples of the betaine compound include trimethyl glycine (also referred to as "glycine betaine"), γ-butyrobetaine, formalin, trigonelline, carnitine, homoserine betaine, valine betaine, lysine betaine, ornithine betaine, alanine betaine, stachydrine, glutamic acid betaine, and the like, and preferred examples include trimethyl glycine and the like.

In addition, a pyrrolidone derivative may be used as the water-soluble organic solvent. Examples of the pyrrolidone derivative include N-methyl-2-pyrrolidone, N-ethyl-2-pyrrolidone, N-vinyl-2-pyrrolidone, 2-pyrrolidone, N-butyl-2-pyrrolidone, 5-methyl-2-pyrrolidone, and the like.

The water-soluble organic solvents may be used as a mixture of plural types. When the water-soluble organic solvent is contained, the content relative to the total mass of the treatment liquid composition is, for example, preferably 10% by mass or less, more preferably 5% by mass or less, and still more preferably 3% by mass or less.

1. 5. Surfactant

The treatment liquid composition according to the present embodiment may contain a surfactant. The surfactant has the function of decreasing the surface tension of the treatment liquid composition to improve wettability to a recording medium.

For example, an acetylene glycol-based surfactant, a silicone-based surfactant, and a fluorine-based surfactant are preferably used as the surfactant. Among these, the acetylene glycol-based surfactant is more preferably contained.

Examples of the acetylene glycol-based surfactant include, but are not particularly limited to, Surfynol 104 (HLB value = 4), 104E, 104H, 104A, 104BC, 104DPM, 104PA, 104PG-50, 104S, 420, 440, 465, 485 (HLB value = 17), SE, SE-F, 504, 61, DF37, CT111, CT121, CT131, CT136, TG, GA, and DF110D (above all trade names, manufactured by Air Products and Chemicals, Inc.), Olfine B, Y, P, A, STG, SPC, E1004, E1010 (HLB value = 14), PD-001, PD-002W, PD-003, PD-004, EXP. 4001, EXP. 4036, EXP. 4051, AF-103, AF-104, AK-02, SK-14, and AE-3 (all above trade names, manufactured by Nissin Chemical Industry Co., Ltd.), Acetynol E00, E00P, E40, and, E100 (all above trade names, manufactured by Kawaken Fine Chemicals Co., Ltd.), and the like.

The silicone-based surfactant is not particularly limited but is, for example, preferably a polysiloxane-based compound. The polysiloxane-based compound is not particularly limited but is, for example, polyether-modified organosiloxane. Examples of a commercial product of the polyether-modified organosiloxane include BYK-306, BYK-307, BYK-333, BYK-341, BYK-345, BYK-346, and BYK-348 (above trade names, manufactured by BYK Chemie Japan K. K.), KF-351A, KF-352A, KF-353, KF-354L, KF-355A, KF-615A, KF-945, KF-640, KF-642, KF-643, KF-6020, X-22-4515, KF-6011, KF-6012, KF-6015, and KF-6017 (above trade names, manufactured by Shin-Etsu Chemical Co., Ltd.), and the like.

A fluorine-modified polymer is preferably used as the fluorine-based surfactant, and examples thereof include BYK-340 (manufactured by BYK Chemie Japan K. K.).

The surfactants may be used alone or in combination of two or more.

The lower limit value of the content of the surfactant relative to the total mass (100% by mass) of the treatment liquid composition is preferably 0.1% by mass or more, more preferably 0.3% by mass or more, and still more preferably 0.5% by mass or more. The upper limit value of the content relative to the total mass (100% by mass) of the treatment liquid composition is preferably 10% by mass or less, more preferably 7% by mass or less, still more preferably 5% by mass or less, particularly preferably 2% by mass or less, and further preferably 1% by mass or less.

In selecting the surfactant, the HLB value is preferably taken into consideration. The lower limit of the HLB value of the surfactant is preferably 6 or more, more preferably 8 or more, and still more preferably 10 or more, and the upper limit of the HLB value is preferably 18 or less, more preferably 16 or less, and still more preferably 14 or less. With the HLB value within the range described above, color development may be more improved.

In the present specification, the HLB value is a value calculated by formula (1) below using the ratio (also simply referred to as the "I/O value" hereinafter) of nonpolarity value (I) to polarity value (O) in the organic concept map.

$$\text{HLB value} = (\text{nonpolarity value (I)}/\text{polarity value (O)}) \times 10 \quad \ldots (1)$$

Specifically, the I/O value can be calculated based on "Systematic Organic Qualitative Analysis (mixture part)" written by Minoru Fujita, Kazama Shobo Co., Ltd., 1974; "Theoretical Chemistry of Dyeing" written by Nobuhiko Kuroki, Maki Shoten, 1966; and "Organic Compound Separation Method" written by Hiroo Inoue, Shouka-bo, 1990.

1. 6. Water-insoluble component

The treatment liquid composition according to the present embodiment may contain a water-insoluble component. The water-insoluble component represents a component which is not dissolved or substantially not dissolved in water, and examples thereof include a water-insoluble coloring material, a water-insoluble resin, wax, a water-insoluble organic solvent, and the like.

Water-insoluble coloring material

Examples of the water-insoluble coloring material include an oil-soluble dye, pigment particles, and the like. Usable examples of the oil-soluble dye include, but are not particularly limited to, a disperse dye, a vat dye, an organic solvent-soluble dye, and the like. The same as the pigment particles contained in an ink jet ink composition described layer can be used as the pigment particles.

Water-insoluble resin

Examples of the water-insoluble resin include resins, such as a urethane-based resin, an acrylic resin, a styrene-acrylic resin, a fluorene-based resin, a polyolefin-based resin, a rosin-modified resin, a terpene-based resin, a polyester-based resin, a polyamide-based resin, an epoxy-based resin, a vinyl chloride-based resin, a vinyl chloride-vinyl acetate copolymer, an ethylene-vinyl acetate-based resin, and the like. The water-insoluble resin is preferably used in the form of resin particles, such as a resin emulsion, a powder, or the like, and is more preferably a resin emulsion of resin particles. The water-insoluble resins may be used alone or in combination of two or more.

The urethane-based resin is a general term of resins having a urethane bond. A urethane-based resin having a bond other than a urethane bond may be used as the urethane-based resin, and examples thereof include a polyether-type urethane resin having an ether bond in its main chain, a polyester-type urethane resin having an ester bond in its main chain, a polycarbonate-type urethane resin having a carbonate resin in its main chain, and the like.

The acrylic resin is a general term of polymers produced by polymerizing at least an acrylic monomer such as (meth)acrylic acid, (meth)acrylate ester or the like as one component, and examples thereof include a resin produced from an acrylic monomer, a copolymer of an acrylic monomer and another monomer, and the like. For example, an acrylic-vinyl-based resin, which a copolymer of an acrylic monomer and a vinyl-based monomer, or the like can be used. Further, for example, a copolymer with a vinyl-based monomer, such as styrene, can be used.

Also, acrylamide, acrylonitrile, and the like can be used as the acrylic monomer. A commercial product may be used as the acrylic resin. In the present specification, the acrylic resin may be a styrene-acrylic resin described later. In the present specification, the description "(meth)acryl" represents at least one of "acryl" and "methacryl".

The styrene-acrylic resin is a copolymer produced from a styrene monomer and an acrylic monomer, and examples thereof include a styrene-acrylic acid copolymer, a styrene-methacrylic acid copolymer, a styrene-methacrylic acid-acrylate ester copolymer, a styrene-$\alpha$-methylstyrene-acrylic acid copolymer, a styrene-$\alpha$-methylstyrene-acrylic acid-acrylate ester copolymer, and the like. A commercial product may be used as the styrene-acrylic resin.

The polyolefin-based resin has a structural skeleton having an olefin such as ethylene, propylene, butylene, or the like, and a known resin can be properly selected and used. A commercial product may be used as the olefin resin.

Examples of a commercial product of a resin particle emulsion which can be used in the present embodiment are described below.

Examples of a urethane-based resin emulsion include Superflex 870, 800, 150, 420, 460, 470, 610, 620, 700, 460s, 840, and E-4000 (trade names manufactured by DKS Co., Ltd.), Permarin UA-150 (trade name manufactured by Sanyo Chemical Industries Co., Ltd.), Suncure 2710 (trade name manufactured by Lubrizol Corporation), NeoRez R-9660, R-9637, and R-940 (trade manes manufactured by Kusumoto Chemicals, Ltd.), Adeka Pointer HUX-380 and 290K (trade names manufactured by ADEKA Corporation), Resamine D-1060, D-2020, D-4080, D-4200, D-6300, and D-6455 (trade names manufactured by Dainichiseika Color & Chemicals Mfg. Co., Ltd.), and Takelac W-6020, W-635, W-6061, W-605, W-635, W-6021, and W-512-A-6 (trade names manufactured by Mitsui Chemicals Polyurethane Co., Ltd.).

Examples of an acrylic resin emulsion include Boncoat 4001 (trade name manufactured by DIC Corporation), Polysol AM-710, AM-920, AM-2300, AP-4735, AT-860, and PSASE-4210E (trade names manufactured by Showa Denko K. K.), Saivinol SK-200 (trade name manufactured by Saiden Chemical Industry Co., Ltd.), AE-120A (trade name manufactured by JSR Corporation), Vinyblan 2682 (trade name manufactured by Nissin Chemical Industry Co., Ltd.),

Movinyl 952B and 718A (trade names manufactured by Nihon Gosei Kako Co., Ltd.), K-854 (trade name manufactured by Chuo Rika Kogyo Co., Ltd.), and Nipol LX852 and LX874 (trade names manufactured by Zeon Corporation).

Examples of a styrene acrylic resin emulsion include Microgel E-1002 and E-5002 (trade names manufactured by Nippon Paint Co., Ltd.), Boncoat 5454 (trade name manufactured by DIC Corporation), Polysol AP-7020 and SAE1014 (trade names manufactured by Showa Denko K. K.), Vinyblan 2586 (trade name manufactured by Nissin Chemical Industry Co., Ltd.), Arobase CB-1200 and CD-1200 (trade names manufactured by Unitika Ltd.), Movinyl 966A, 7320, and 975N (trade names manufactured by Nihon Gosei Kako Co., Ltd.), and Joncryl 62J, 7100, 390, 711, 511, 7001, 632, 741, 450, 840, 74J, HRC-1645J, 734, 852, 7600, 775, 537J, 1535, PDX-7630A, 352J, 352D, PDX-7145, 538J, 7640, 7641, 631, 790, 780, and 7610 (trade names manufactured by BASF Corporation).

Examples of other resin emulations include Elitel KA-5071S, KT-8803, KT-9204, KT-8701, KT-8904, and KT-0507 (trade names manufactured by Unitika Ltd., polyester resin emulsion), Hitech SN-2002 (trade names manufactured by Toho Chemical Industry Co., Ltd, polyester resin emulsion), Polysol SH-502 (trade name manufactured by Showa Denko K. K., vinyl acetate resin emulsion), Polysol AD-13, AD-2, AD-10, AD-96, AD-17, and AD-70 (trade names manufactured by Showa Denko K. K. ethylene-vinyl acetate resin emulsion), Polysol PSASE-6010 (trade name manufactured by Showa Denko K. K. ethylene-vinyl acetate resin emulsion), AE373D (trade name manufactured by E-Tech Co., Ltd., carboxyl-modified styrene-acrylic resin emulsion), Seikadyne 1900W (trade name manufactured by Dainichiseika Color & Chemicals Mfg. Co., Ltd., ethylene-vinyl acetate resin emulsion), Vinylblan 2886 (trade name manufactured by Nissin Chemical Industry Co., Ltd., vinyl acetate-acrylic resin emulsion), Vinylblan 5202 (trade name manufactured by Nissin Chemical Industry Co., Ltd., acetic acid-acrylic resin emulsion), NK Binder R-5HN (trade name manufactured by Shin-Nakamura Chemical Co., Ltd.), and Hydran WLS-210 (trade name manufactured by DIC Corporation, noncrosslinkable polyurethane emulsion)

Wax.

Examples of the wax include, but are not particularly not limited to, hydrocarbon wax, and ester wax which is a condensate of fatty acid and monohydric alcohol or polyhydric alcohol. Examples of hydrocarbon wax include, but are not particularly limited to, paraffin wax, and polyolefin wax such as polyethylene wax and polypropylene wax, and the like. These waxes may be used alone or in combination of two or more.

Examples of a commercial product of paraffin wax include AQUACER 497 and AQUACER 539 (above trade names manufactured by BYK Co., Ltd.).

Examples of a commercial product of polyolefin wax include Chemipearl S120, S650, and S75N (trade names, manufactured by Mitsui Chemicals Inc.) and AQUACER 501, AQUACER 506, AQUACER 513, AQUACER 515, AQUACER 526, AQUACER 593, and AQUACER 582 (trade names, manufactured by BYK Co., Ltd.).

The water-insoluble components may be used alone or in combination of two or more.

The treatment liquid composition according to the present embodiment preferably does not contain over 1.0% by mass, more preferably does not contain over 0.70% by mass, still more preferably does not contain over 0.50% by mass, particularly preferably does not contain over 0.30% by mass, and further particularly preferably does not contain over 0.10% by mass, of the water-insoluble component relative to the total mass of the treatment liquid composition, and the water-insoluble component may not be contained. When the water-insoluble component is contained, there is a tendency that the friction fastness and the like can be improved, but coating stability may be degraded. However, the treatment liquid composition according to the present embodiment has a tendency that the friction fastness and coating stability can be improved even when the content of the water-insoluble component is within the range described above. The water-insoluble component preferably includes resin particles from the viewpoint that the effect exhibited by the present disclosure can be more acquired.

1. 7. Other component

If required, the treatment liquid composition according to the present embodiment may contain a pH adjuster, a preservative/anti-mold agent, an anti-rust agent, a chelating agent, a viscosity modifier, a solubilizer, an antioxidant, etc.

pH adjuster

Examples of the pH adjuster include amines and modified products thereof, such as diethanolamine, triethanolamine, propanolamine, morpholine, and the like; organic acids such as acetic acid, citric acid, phthalic acid, oxalic acid, succinic acid, adipic acid, amino acids, and the like; inorganic salts such as sodium hydroxide, potassium hydroxide, and the like; ammonium hydroxide; quaternary ammonium hydroxide (tetramethyl ammonium); and the like.

Preservative/anti-mold agent

Examples of the preservative/anti-mold agent include sodium benzoate, pentachlorophenol sodium, 2-pyridinetiol-1-oxide sodium, sodium sorbate, sodium dehydroacetate, 1,2-dibenzinethiazolin-3-one (ICI Co., Ltd., Proxel CRL, Proxel BND, Proxel GXL, Proxel XL-2, and Proxel TN), and the like.

Chelating agent

The chelating agent has the property of capturing an ion. Examples of the chelating agent include ethylenediamine tetraacetate salt (EDTA), ethylenediamine nitrilotriacetate salt, hexametaphosphate salt, pyrophosphate salt, metaphosphate salt, and the like.

1. 8. Production method

The treatment liquid composition according to the present embodiment can be produced by mixing the components described above in any desired order and, if required, removing impurities by filtration or the like. A method preferably used as a method for mixing the components includes sequentially adding the materials in a vessel provided with a stirrer, such as a mechanical stirrer, a magnetic stirrer, or the like, and mixing and stirring the materials. If required, a filtration method can be performed by centrifugal filtration, filter filtration, or the like.

1. 9. Physical properties of treatment liquid composition

The physical properties, such as pH, surface tension, viscosity, etc., of the treatment liquid composition according to the present embodiment may be adjusted within the respective desired ranges.

The treatment liquid composition according to the present embodiment preferably has a pH of less 7, more preferably a pH of less than 6, still more preferably a pH of less than 5, and particularly preferably a pH of less 4. When an ink jet ink composition described later which can be used together with the treatment liquid composition according to the present embodiment has a pH exceeding 8, dispersion is stabilized. With the treatment liquid composition having a pH within the range described above, the dispersion of the ink is easily destabilized when mixed with the ink jet ink composition, and aggregation may be accelerated to improve reactivity with the ink, thereby more improving color development.

The treatment liquid composition according to the present embodiment preferably has a surface tension at 25°C of 10 mN/m or more and 40 mN/m or less, and more preferably 25 mN/m or more and 40 mN/m or less. The surface tension can be measured by, for example, determining the surface tension when a platinum plate is wet with the treatment liquid composition in an environment of 25°C using automatic surface tensiometer CBVP-Z (trade name, manufactured by Kyowa Interface Science Co., Ltd.).

The treatment liquid composition according to the present embodiment preferably has a viscosity at 20°C of 2 mPa·s or more and 15 mPa·s or less, more preferably 2 mPa·s or more and 5 mPa·s or less, and still more preferably 2 mPa·s or more and 3.6 mPa·s or less. The viscosity can be measured by, for example, measuring viscosity in an environment of 40°C or 20°C using a viscoelasticity tester MCR-300 (trade name, manufactured by Physica Corporation).

1. 10 Application

The treatment liquid composition according to the present embodiment is preferably used for an aqueous pigment ink jet ink. In addition, an ink jet ink composition described later can be preferably applied to the aqueous pigment ink jet ink.

The treatment liquid composition according to the present embodiment is preferably used by coating a fabric. When an image is formed on a fabric using an ink, high quality is required in terms of color development, wet friction fastness, texture, etc. The treatment liquid composition according to the present embodiment has a tendency that both excellent color development and excellent wet friction fastness, which are required for forming an image on a fabric, can be achieved, and texture can be improved.

Examples of a material constituting a fabric include natural fibers of cotton, hemp, wool, silk, and the like; synthetic fibers of polypropylene, polyester, acetate, triacetate, polyamide, polyurethane, and the like; biodegradable fibers of polylactic acid and the like; and the like. A mixture of these fibers may be used.

The polyamide epihalohydrin polymer contained in the treatment liquid composition according to the present embodiment has a function that can decrease swelling of fibers due to containing of water by bonding of an amide portion or the like in the structure to a hydroxyl group in the fabric fibers and thus improvs water resistance, and also has a function of improving structural strength by crosslinking of an epihalohydrin portion. Al least one of the functions is acted regardless of the material constituting the fabric. Therefore, even when the material constituting the fabric is any of natural fibers of cotton or the like and synthetic fibers of polyester or the like, the treatment liquid composition according to the present embodiment exhibits the effect of improving the excellent wet friction fastness.

The whiteness of the fabric is preferably 70 or more, more preferably 80 or more, and still more preferably 90 or more. The whiteness represents a L* value in the CIE/L*a*b* color system. The whiteness can be measured by using a colorimeter "Gretag Macbeth Spectrolino" (trade name manufactured by X-Rite Inc.). The fabric having a whiteness within the range described above is a relatively white fabric and thus has a problem that yellowing is particularly conspicuous. However, the treatment liquid composition according to the present embodiment causes little yellowing and thus can be used without causing the problem of yellowing even in such a fabric.

2. Set of ink jet ink composition and treatment liquid composition

A set of an ink jet ink composition and a treatment liquid composition according to an embodiment of the present disclosure is a set of an ink jet ink composition and the treatment liquid composition described above. The ink jet ink composition is an aqueous pigment ink jet ink containing pigment particles and resin particles and has a pH of over 8, and the particle components contained has a volume-average particle diameter of 20 to 500 nm. The set of the ink jet ink composition and the treatment liquid composition may include the ink jet ink composition and the treatment liquid composition used as a set for recording. That is, the ink composition and the treatment liquid composition used as a set for recording are referred to as the "set of the ink jet ink composition and the treatment liquid composition".

The ink jet ink composition included in the set of the ink jet ink composition and the treatment liquid composition according to the present embodiment (also referred to as the "ink treatment liquid set" hereinafter) causes dispersion to be stabilized at a pH of over 8. When the ink jet ink composition is mixed with the treatment liquid composition, dispersion of the ink is easily destabilized, and aggregation of the particle components is promoted. Therefore, there is a tendency that reactivity of the ink with the treatment liquid is improved, thereby causing particularly excellent color development. Thus, the ink treatment liquid set according to the present embodiment can achieve both particularly excellent color development and excellent wet friction fastness.

Each of the components of the treatment liquid composition included in the ink treatment liquid set according to the present embodiment is as described above, thus description thereof is omitted. Each of the components contained in the ink jet ink composition included in the ink treatment liquid set according to the present embodiment is described below.

2. 1. Ink jet ink composition

The ink jet ink composition included in the ink treatment liquid set according to the present embodiment is an aqueous pigment ink jet ink containing the pigment particles and the resin particles.

2. 1. 1. Pigment particles

Examples of the pigment particles include organic pigments such as cyan, magenta, yellow, black, and the like, and special color pigments such as a white pigment, a photoluminescent pigment, and the like.

Examples of the organic pigments include a quinacridone-based pigment, a quinacridone quinone-based pigment, a dioxane-based pigment, a dioxazine-based pigment, a phthalocyanine-based pigment, an anthrapyrimidine-based pigment, an anthanthrone-based pigment, an indanthrone-based pigment, a flavanthrone-based pigment, a perylene-based pigment, a diketopyrrolopyrrole-based pigment, a perinone-based pigment, a quinophthalone-based pigment, an anthraquinone-based pigment, a thioindigo-based pigment, a benzimidazolone-based pigment, a thioindigo-based pigment, an isoindolinone-based pigment, an azomethine-based pigment, a dye chelate, a lake pigment, a nitro-based pigment, a nitroso based pigment, aniline black, azo-based pigments such as an insoluble azo pigment, a condensed azo pigment, an azo lake, a chelate azo pigment, and the like, and the like.

Examples of the organic pigments include the following.

Examples of a pigment used for a cyan ink include C. I. Pigmen Blue 1, 2, 3, 15:3, 15:4, 16, 22, 60, and the like; and C. I. Vat Blue 4, 60, and the like, and one or a mixture of two or more selected from the group consisting of C. I. Pigment Blue 15:3, 15:4, and 60 is preferably used.

Examples of a pigment used for a magenta ink include C. I. Pigment Red 5, 7, 12, 48(Ca), 48(Mn), 57(Ca), 57:1, 112, 122, 123, 168, 184, and 202, and C. I. Pigment Violet 19, and the like. Preferred is one or a mixture of two or more selected from the group consisting of C. I. Pigment Red 122, 202, and 209 and C. I. Pigment Violet 19.

Examples of a pigment used for a yellow ink include C. I. Pigment Yellow 1, 2, 3, 12, 13, 14C, 16, 17, 73, 74, 75, 83, 93, 95, 97, 98, 119, 110, 114, 128, 129, 138, 150, 151, 154, 155, 180, 185, and the like, and preferred is one or a mixture of two or more selected from the group consisting of C. I. Pigment Yellow 74, 109, 110, 128, and 138.

A pigment used for an orange ink is C. I. Pigment Orange 36 or 43 or a mixture thereof.

A pigment used for a green ink is C. I. Pigment Green 7 or 36 or a mixture thereof.

Examples of carbon black include furnace black, lamp black, acetylene black, channel black (C. I. Pigment Black 7), and the like, and examples of a commercial product include No. 2300, 900, MCF88, No. 20B, No. 33, No. 40, No. 45, No. 52, MA7, MA8, MA100, No2200B, and the like (trade names, manufactured by Mitsubishi Chemical Corporation), Color black FW1, FW2, FW2V, FW18, FW200, S150, S160, and S170, Pretex 35, U, V, and 140U, Special Black 6, 5, 4A, 4, 250, and the like (trade names, manufactured by Degussa Corporation), Conductex SC, Raven 1255, 5750, 5250, 5000, 3500, 1255, 700, and the like (all trade names, manufactured by Columbia Carbon Co., Ltd.), and Regal 400R, 330R, and 660R, Mogul L, Monarch 700, 800, 880, 900, 1000, 1100, 1300, and 1400, Elftex 12, and the like (trade names, manufactured by Cabot Corporation). These carbon blacks may be used alone or as a mixture of two or more.

The photoluminescent pigment is not particularly limited as long as it can exhibit photoluminescence when adhered to a medium, and examples thereof include metal particles of one or an alloy (also referred to as a metal pigment) of two or more selected from the group consisting of aluminum, silver, gold, platinum, nickel, chromium, tin, zinc, indium, and copper, and a pearl pigment having pearl luster. Typical examples of the pearl pigment include pigments having pearl luster or interference luster, such as titanium oxide-coated mica, fish scale flakes, bismuth oxychloride, and the like. In addition, the photoluminescent pigment may be surface-treated for suppressing reaction with water.

Examples of the white pigment include metal compounds such as metal oxides, barium sulfate, calcium carbonate, and the like. Examples of metal oxides include titanium oxide, zinc oxide, silica, alumina, magnesium oxide, and the like. In addition, particles having a hollow structure may be used as the white pigment.

These types of the pigment particles may be used alone or in combination of two or more. The pigment particles are preferably organic pigment particles from the viewpoint of storage stability such as light resistance, whether resistance, gas resistance, etc.

The pigment particles can be preferably stably dispersed in an ink. For example, the pigment particles may be used as self-dispersible pigment particles prepared by, oxidizing the pigment particle surfaces with ozone, hypochlorous acid, fuming sulfuric acid, or the like or modifying the pigment particle surfaces by sulfonation, or may be dispersed with a resin dispersant and used.

Examples of the resin dispersant include polyvinyl alcohols, polyacrylic acid, acrylic acid-acrylonitrile copolymer, vinyl acetate-acrylate ester copolymer, acrylic acid-acrylate ester polymer, styrene-acrylic acid copolymer, styrene-methacrylic acid copolymer, styrene-methacrylic acid-acrylate ester copolymer, styrene-$\alpha$-methylstyrene-acrylic acid copolymer, styrene-$\alpha$-methylstyrene-acrylic acid-acrylate ester copolymer, styrene-maleic acid copolymer, styrene-maleic anhydride copolymer, vinylnaphthalene-acrylic acid copolymer, vinyl naphthalene-maleic acid copolymer, vinyl acetate-maleate ester copolymer, vinyl acetate-crotonic acid copolymer, vinyl acetate-acrylic acid copolymer, and salts thereof.

Among these, preferred are a copolymer of a monomer having a hydrophobic functional group and a monomer a hydrophilic functional group, and a polymer of a monomer having a hydrophobic functional group and a hydrophilic functional group. The copolymer can be used in the form of any one of a random copolymer, a block copolymer, an alternative copolymer, and a graft copolymer.

The resin dispersant described above has the function of enhancing the dispersibility of the pigment particles. The resin dispersant has, for example, water solubility. The resin dispersant also or alternatively adheres to the pigment and is present around the pigment particles.

The content ratio of the resin dispersant can be properly selected according to the pigment particles to be dispersed, but is preferably 5 parts by mass or more and 200 parts by mass or less and more preferably 20 parts by mass or more and 120 parts by mass or less relative to the content of 100 parts by mass of the pigment particles in the ink.

The content of the pigment particles in the ink relative to the total mass of the ink is preferably 0.3% by mass or more and 20% by mass or less, more preferably 0.5% by mass or more and 15% by mass or less, still more preferably 1% to 10% by mass, and particularly preferably 1.5% to 5% by mass. The pigment particles at a content within the range described above causes less nozzle clogging or the like in an ink jet recording apparatus and thus can sufficiently satisfy a color density. Also, the pigment articles at a content within or higher than the range described above can easily form an image having more excellent color development.

2. 1. 2. Resin particles

The same as the resin particles in the water-insoluble component which may be contained in the treatment liquid composition can be used as the resin particles.

2. 1. 3. Physical properties of particle components

The volume-average particle diameter of the particle components such as the pigment particles and resin particles described above contained in the ink jet ink composition is 20 to 500 nm.

The volume-based average particle diameter (D50) (also referred to as the "volume-average particle diameter") (before mixed in the ink) of the particle components is 20 nm or more, preferably 50 nm or more, more preferably 80 nm or more, still more preferably 110 nm or more, and particularly preferably 150 nm or more. Also, the volume-average particle diameter of the resin particles is 500 nm or less, preferably 400 nm or less, more preferably 300 nm or less, still more preferably 250 nm or less, and particularly preferably 200 nm or less. With the volume-average particle diameter within the range described above, easy availability and good characteristics can be easily obtained. Also, when the particle components have a volume-average particle diameter within the range described above, there is a tendency that the particle components are hardly sedimented and thus dispersion stability can be improved, and also nozzle clogging or the like can be made difficult to occur when applied to an ink jet recording apparatus.

The volume-average particle diameter of the particle components can be measured by a particle size distribution measuring device using a laser diffraction scattering method as a measurement principle. The particle size distribution measuring device is, for example, a particle size distribution meter (for example, "Microtrac UPA" manufactured by Nikkiso Co., Ltd.) using a dynamic light scattering method as a measurement principle.

The content of the particle components in terms of solid content relative to the total mass of the ink jet ink composition is 0.2% by mass or more and 40% by mass or less, preferably 2% by mass or more and 30% by mass or less, more preferably 4% by mass or more and 20% by mass or less, and still more preferably 6% by mass or more and 15% by mass or less.

The particle components such as the pigment particles and the resin particles described above, which are contained in the ink jet ink composition, preferably has anionicity. The treatment liquid composition described above contains the polyamide epihalohydrin polymer and the specific quaternary ammonium salt polymer which are cationic polymers. Therefore, when the particle components such as the pigment particles and the resin particles of the ink has anionicity, there is a tendency that aggregation reaction effectively takes place when the treatment liquid composition is mixed with the ink, and thus more excellent color development can be obtained.

A preferred example of the pigment particles with anionicity is pigment particles with a dispersant having an anionic group present on the surfaces thereof, and a dispersant having an anionic group is, for example, a dispersant having -COO⁻ or -SO$_3$- as an anionic group.

Examples of the resin particles having anionicity include resin particles having an anionic functional group such as a carboxyl group, a sulfo group, a hydroxyl group, or the like, and an anionic urethane-based resin is preferred. Examples of an anionic urethane-based resin among the commercial products of urethane-based resin described above include Superflex 460, 460s, and 840 manufactured by DKS Co., Ltd., Takelac WS-5000, WS-6021, and W-512-A-6 manufactured by Mitsui Chemicals Polyurethane Co., Ltd., and the like.

2. 1. 4. Water

The ink jet ink composition included in the ink treatment liquid set according to the present embodiment is an aqueous pigment ink jet ink and contains water. The term "aqueous" represents containing water as a main solvent. The water is the same as that which can be contained in the treatment liquid composition described above.

The content of the water is not particularly limited, but the content relative to the total mass of the ink jet ink composition may be 40% by mass or more, 50% by mass or more, or 60% by mass or more. The upper limit of the content of water contained in the ink jet ink composition may be 90% by mass or less, 80% by mass or less, or 70% by mass or less.

2. 1. 5. Organic solvent

The ink jet ink composition included in the ink treatment liquid set according to the present embodiment may contain an organic solvent. The organic solvent is preferably a water-soluble organic solvent. The same as those which can be contained in the treatment liquid composition described above can be used as the water-soluble organic solvent.

When the water-soluble organic solvent is contained, the content thereof relative to the total mass of the ink jet ink composition is preferably 30% by mass or less, more preferably 25% by mass or less, and still more preferably 20% by mass or less. Also, the content of the water-soluble organic solvent relative to the total mass of the ink jet ink composition is preferably 5% by mass or more, more preferably 10% by mass or more, and still more preferably 15% by mass or more.

2. 1. 6. Surfactant

The ink jet ink composition included in the ink treatment liquid set according to the present embodiment may contain surfactant. The same as those which can be contained in the treatment liquid composition described above can be used as the surfactant, and the content thereof can also be the same as described above.

2. 1. 7. Other component

If required, the ink jet ink composition included in the ink treatment liquid set according to the present embodiment may contain wax, a pH adjuster, a preservative/ anti-mold agent, an anti-rust agent, a chelating agent, a viscosity modifier, a solubilizer, an antioxidant, etc. The description of these components is omitted because these components are the same as those contained in the treatment liquid composition described above.

2. 1. 8. Production method

The ink jet ink composition included in the ink treatment liquid set according to the present embodiment can be produced by mixing the components in any desired order and, if required, removing impurities from the resultant mixture by filtration or the like. A method preferably used as a method for mixing the components includes sequentially adding the materials in a vessel provided with a stirrer, such as a mechanical stirrer, a magnetic stirrer, or the like, and mixing and stirring the materials. If required, a filtration method can be performed by centrifugal filtration, filter filtration, or the like.

2. 1. 9. Physical properties of ink jet ink composition

The physical properties: pH, surface tension, viscosity, etc., of the ink jet ink composition included in the ink treatment liquid set according to the present embodiment may be adjusted within the respective desired ranges.
The ink jet ink composition has a pH of over 8, preferably a pH of over 9, more preferably a pH of over 10, and still more preferably a pH of over 11. The ink jet ink composition having a pH within the range described above has a tendency that dispersion of the ink is easily destabilizd when mixed with the treatment liquid composition, and aggregation of the particle components is accelerated to more improve color development.
The physical properties such as surface tension and viscosity can be adjusted to be the same as those of the treatment liquid composition described above.

3. Treatment method

A treatment method according to an embodiment of the present disclosure includes adhering the treatment liquid composition to a fabric, and heating the fabric with the treatment liquid composition adhered thereto, the surface temperature of the fabric during heating being 100°C or more.
The treatment method according to the present embodiment includes a treatment of heating the fabric, to which the treatment liquid composition described above has been adhered, so that the surface temperature becomes 100°C or more, and the treatment method can achieve both excellent color development and excellent wet friction fastness.
Each of the processes of the treatment method according to the present embodiment is described below.

3. 1. Adhesion

The treatment method according to the present embodiment include adhering the treatment liquid composition to a fabric. The treatment liquid composition and fabric are as described above, and thus description thereof is omitted.
Examples of a method (coating method) for adhering the treatment liquid composition to a fabric include a method of dipping the fabric in the treatment liquid composition (dip coating), a method of coating the treatment liquid composition on the fabric using a roll coater (roller coating), a method of spraying the treatment liquid composition using a spray device or the like (spray coating), a method of ejecting the treatment liquid composition by an ink jet method (ink jet coating), and the like. Any one of the methods may be used. The ink jet coating of the treatment liquid composition is preferred in view of the fact that the treatment liquid composition can be easily controlled to be uniformly adhered to the fabric. Also, dip coating or spray coating of the treatment liquid composition is preferred in view of the fact that the treatment liquid composition can be coated on the fabric within a short time.
The coating amount of the treatment liquid composition per unit area of the fabric is preferably 50 to 200 g/m$^2$, more preferably 70 to 170 g/m$^2$, still more preferably 90 to 140 g/m$^2$, and particularly preferably 100 to 120 g/m$^2$. When the coating amount of the treatment liquid composition is within the range described above, the effect exhibited by the present disclosure may be easily acquired.

3. 2. Heating

The treatment method according to the present embodiment includes, after the adhesion described above, heating the fabric to which the treatment liquid composition has been adhered. Examples of the heating method include, but are not particularly limited to, a convective heat drying method, a radiant heat drying method, a conductive heat drying method, and the like. In addition, heat generated from a combustion burner of combustible gas, a carbon heater, a ceramic heater, a halogen lamp, or an infrared lamp can be used as a heat source used for drying.

The lower limit value of the surface temperature of the fabric in the heating is preferably 40°C or more, more preferably 80°C or more, and still more preferably 100°C or more. In addition, the upper limit value of the surface temperature of the fabric in the heating is preferably 180°C or less. With the heating temperature of 180°C or less, damage due to the thermal stress applied to the fabric during heat drying can be suppressed. While, with the heating temperature equal to or higher than the lower limit value, the moisture and solvent contained in the treatment liquid composition can be efficiently evaporated, thereby accelerating drying of the treated fabric. Further, when the material constituting the fabric contains cotton, the heating temperature of 100°C or more can accelerate crosslinking reaction of the polyamide epihalohydrin polymer contained in the treatment liquid composition with cellulose fibers in the cotton fabric.

4. Examples

The present disclosure is described in further detail below by examples, but the present disclosure is not limited to these examples. In addition, "%" is on a mass basis unless otherwise specified.

4. 1. Preparation of treatment liquid composition

Components were mixed at the contents shown in Table 1 and Table 2 below, stirred at room temperature for 2 hours, and then filtered with a membrane filter having a pore diameter of 5 μm, preparing each treatment liquid composition. In Table 1 and Table 2 below, the unit of the contents of compositions is "% by mass" and shown as "wt%" in the tables.

4. 2. Preparation of ink jet ink composition

Components were mixed at the contents described below in an example of black ink composition, stirred at room temperature for 2 hours, and then filtered with a membrane filter having a pore diameter of 5 μm, preparing an ink jet ink composition (black ink). In the example of black ink composition described below, the content of a pigment is a pigment solid content, and the content of resin emulsion is a resin solid content. In addition, the carbon black pigment used for preparing the ink jet ink composition was a black pigment dispersion previously prepared by mixing a pigment dispersant (not described in the composition example below) as a water-soluble styrene acrylic resin with water at a mass ratio of 1:1 (pigment : pigment dispersant) and then sufficiently stirring the resultant mixture.

The example of black ink composition is as follows.

Black pigment dispersion: carbon black pigment 5% by mass

| | |
|---|---|
| Resin emulsion: WS6021 | 6% by mass |
| Glycerin | 6% by mass |
| Trimethylolpropane | 8% by mass |
| Triethylene glycol | 5% by mass |
| EDTA | 0.1% by mass |
| Inorganic alkali: KOH | 0.1% by mass |
| Surfactant: Olfine E1010 | 1% by mass |
| Surfactant: Surfynol 104 | 0.5% by mass |
| Pure water | 68.3% by mass |

The supplementary description of the black ink is given.

· Carbon black pigment: C. I. Pigment Black 7
· WS6021: Takelac WS-6021, trade name manufactured by Mitsui Chemicals Co., Ltd., solid content: 30% by mass, urethane resin
· EDTA: ethylenediamine tetraacetic acid, metal chelating agent
· Olfine E1010: trade name manufactured by Nissin Chemical Industry Co., Ltd., acetylene glycol-based surfactant, HLB = 14

· Surfynol 104: trade name manufactured by Nissin Chemical Industry Co., Ltd., acetylene glycol-based surfactant, HLB = 4

The pH of the black ink was over 8. In addition, the pH was measured by immersing an electrode portion in the ink jet ink composition using desktop pH meter F-72 model (manufactured by Horiba, Ltd.).

4. 3. Recording medium

The recording medium used was the following fabric.

Cotton fabric
Fiber: cotton
Type: taffeta
Composition: 100% cotton
Weight: 8.04 to 8.55 (g/m$^2$)
Standard size: 145 to 150 (cm)
Manufacturer: A. FERRARIO
Whiteness L* value: 91.5

The L* value of the fabric was measured by using colorimeter "Gretag Macbeth Spectrolino" (trade name manufactured by X-Rite Inc.).

Table 1

| | | Example 1 | Example 2 | Example 3 | Example 4 | Example 5 | Example 6 | Example 7 | Example 8 | Example 9 | Example 10 | Example 11 | Example 12 |
|---|---|---|---|---|---|---|---|---|---|---|---|---|---|
| Polyamide epihalohydrin polymer | Polyamide epichlorohydrin polymer A | 1.0wt% | | | | | | | | | | | |
| | Polyamide polyamine epichlorohydrin polymer | | 1.0wt% | | 1.0wt% | 1.0wt% | | | | | 1.0wt% | 1.0wt% | 1.0wt% |
| | Polyamide epichlorohydrin polymer B | | | 1.0wt% | | | 0.2wt% | 0.5wt% | 2.0wt% | 5.0wt% | | | |
| | Dimethylamine diethylenediamine epi-chlorohydrin polycondensate | | | | | | | | | | | | |
| Polyvalent metal salt | Calcium nitrate tetrahydrate | | | | | | | | | | | | |
| | Calcium chloride dihydrate | | | | | | | | | | | | |
| Quaternary ammonium salt polymer | Quaternary ammonium salt polymer A | 1.0wt% | 1.0wt% | 1.0wt% | | | 1.0wt% | 1.0wt% | 1.0wt% | 1.0wt% | 0.2wt% | 0.5wt% | 2.0wt% |
| | Quaternary ammonium salt polymer B | | | | 1.0wt% | | | | | | | | |
| | Quaternary ammonium salt polymer C | | | | | 1.0wt% | | | | | | | |
| Resin particle | Urethane resin | | | | | | | | | | | | |
| Surfactant | Acetylene glycol | 0.5wt% | 0.5wt% | 0.5wt% | 0.5wt% | 0.5wt% | 0.5wt% | 0.5wt% | 0.5wt% | 0.5wt% | 0.5wt% | 0.5wt% | 0.5wt% |
| Preservative | Proxel XL2 | 0.2wt% | 0.2wt% | 0.2wt% | 0.2wt% | 0.2wt% | 0.2wt% | 0.2wt% | 0.2wt% | 0.2wt% | 0.2wt% | 0.2wt% | 0.2wt% |
| pH adjuster | Triethanolamine | | | | | | | | | | | | |
| Solvent | Pure water | 97.3wt% | 97.3wt% | 97.3wt% | 97.3wt% | 97.3wt% | 98.1wt% | 97.8wt% | 96.3wt% | 93.3wt% | 98.1wt% | 97.8wt% | 96.3wt% |
| | Total | 100.0wt% | 100.0wt% | 100.0wt% | 100.0wt% | 100.0wt% | 100.0wt% | 100.0wt% | 100.0wt% | 100.0wt% | 100.0wt% | 100.0wt% | 100.0wt% |
| Treatment conditions | Drying temperature after coating of pretreatment liquid composition | 100°C | 100°C | 100°C | 100°C | 100°C | 100°C | 100°C | 100°C | 100°C | 100°C | 100°C | 100°C |
| | Drying temperature after ink printing | 160°C | 160°C | 160°C | 160°C | 160°C | 160°C | 160°C | 160°C | 160°C | 160°C | 160°C | 160°C |

(continued)

| | | | Example 1 | Example 2 | Example 3 | Example 4 | Example 5 | Example 6 | Example 7 | Example 8 | Example 9 | Example 10 | Example 11 | Example 12 |
|---|---|---|---|---|---|---|---|---|---|---|---|---|---|---|
| Evaluation items | Spray coating stability | Two fluid nozzle (1008+ spray controller) | A | A | A | A | A | A | A | A | A | A | A | A |
| | Color development | Black ink_100%Duty | A | A | A | A | A | S | A | A | A | B | A | A |
| | Friction fastness | Discoloration | Dry friction strength | A | A | A | A | A | B | A | A | S | S | A | A |
| | | | Wet friction strength | A | A | A | A | A | B | A | A | S | S | A | A |
| | Texture | Shear rigidity | A | A | A | A | A | S | A | B | B | S | S | B |
| | Light resistance | Yellowing | A | A | A | A | A | A | A | A | B | A | A | A |
| | pH | | <6 | <6 | <6 | <6 | <6 | <6 | <6 | <6 | <6 | <6 | <6 | <6 |

Table 2

| | | Example 13 | Example 14 | Example 15 | Example 16 | Example 17 | Example 18 | Example 19 | Example 20 | Comparative Example 1 | Comparative Example 2 | Comparative Example 3 | Comparative Example 4 |
|---|---|---|---|---|---|---|---|---|---|---|---|---|---|
| Polyamide epihalohydrin polymer | Polyamide epichlorohydrin polymer A | | | | | | | | | | | | |
| | Polyamide polyamine epichlorohydrin polymer | 1.0wt% | 0.2wt% | 0.5wt% | 1.0wt% | 1.0wt% | | 1.0wt% | 1.0wt% | 1.0wt% | | 1.0wt% | |
| | Polyamide epichlorohydrin polymer B | | | | | | | | | | | | |
| | Dimethylamine diethylenediamine epichlorohydrin polycondensate | | | | | | 1.0wt% | | | | | | |
| Polyvalent metal salt | Calcium nitrate tetrahydrate | | | | | | | | | 5.0wt% | | | |
| | Calcium chloride dihydrate | | | | | | | | | | 5.0wt% | | |
| Quaternary ammonium salt polymer | Quaternary ammonium salt polymer A | 5.0wt% | 0.2wt% | 0.5wt% | 1.0wt% | 1.0wt% | | 1.0wt% | 1.0wt% | | | | 1.0wt% |
| | Quaternary ammonium salt polymer B | | | | | | 1.0wt% | | | | | | |
| | Quaternary ammonium salt polymer C | | | | | | | | | | | | |
| Resin particle | Urethane resin | | | | 0.2wt% | 1.0wt% | | | | | | | |
| Surfactant | Acetylene glycol | 0.5wt% | 0.5wt% | 0.5wt% | 0.5wt% | 0.5wt% | 0.5wt% | 0.5wt% | 0.5wt% | 0.5wt% | 0.5wt% | 0.5wt% | 0.5wt% |
| Preservative | Proxel XL2 | 0.2wt% | 0.2wt% | 0.2wt% | 0.2wt% | 0.2wt% | 0.2wt% | 0.2wt% | 0.2wt% | 0.2wt% | 0.2wt% | 0.2wt% | 0.2wt% |
| pH adjuster | Triethanolamine | | | | | | 1.0wt% | | | | | | |
| Solvent | Pure water | 93.3wt% | 98.9wt% | 98.3wt% | 97.3wt% | 97.3wt% | 96.3wt% | 97.3wt% | 97.3wt% | 93.3wt% | 94.3wt% | 98.3wt% | 98.3wt% |
| | Total | 100.0wt% | 100.0wt% | 100.0wt% | 100.0wt% | 100.0wt% | 100.0wt% | 100.0wt% | 100.0wt% | 100.0wt% | 100.0wt% | 100.0wt% | 100.0wt% |
| Treatment conditions | Drying temperature after coating of pretreatment liquid composition | 100°C | 100°C | 100°C | 100°C | 100°C | 100°C | 25°C | 80°C | 100°C | 100°C | 100°C | 100°C |
| | Drying temperature after ink printing | 160°C | 160°C | 160°C | 160°C | 160°C | 160°C | 160°C | 160°C | 160°C | 160°C | 160°C | 160°C |

(continued)

| Evaluation items | | | Example 13 | Example 14 | Example 15 | Example 16 | Example 17 | Example 18 | Example 19 | Example 20 | Comparative Example 1 | Comparative Example 2 | Comparative Example 3 | Comparative Example 4 |
|---|---|---|---|---|---|---|---|---|---|---|---|---|---|---|
| | Spray coating stability | Two fluid nozzle (1008+ spray controller | A | A | A | A | B | A | A | A | A | A | A | A |
| | Color development | Black ink_100%Duty | S | B | A | A | A | B | A | A | S | S | C | A |
| | Friction fastness | Discoloration | Dry friction strength | B | A | A | A | A | A | B | A | A | A | S | B |
| | | | Wet friction strength | B | B | A | A | A | A | B | B | C | C | S | C |
| | Texture | Shear rigidity | B | S | S | A | A | A | A | A | S | S | C | S |
| | Light resistance | Yellowing | A | A | A | A | A | A | A | A | A | C | A | A |
| | pH | | <6 | <6 | <6 | <6 | <6 | >7 | <6 | <6 | <6 | <6 | <6 | <6 |

18

The supplementary description of Table 1 and Table 2 is given.

Composition

The supplementary description of the polyamide epihalohydrin polymer, the quaternary ammonium salt polymer, the resin particles, the surfactant, and the preservative is as follows.

Polyamide epihalohydrin polymer

· Polyamide epichlorohydrin polymer A: trade name "WS4020" manufactured by Seiko PMC Corporation
· Polyamide polyamine epichlorohydrin polymer: trade name "AF-255" manufactured by Arakawa Chemical Industries, Ltd.
· Polyamide epichlorohydrin polymer B: trade name "WS4030" manufactured by Seiko PMC Corporation
· Dimethylamine ethylenediamine epichlorohydrin polycondensate: trade name "PE-30" manufactured by Yokkaichi Chemical Co., Ltd.

Quaternary ammonium salt polymer

· Quaternary ammonium salt polymer A: trade name "PAS-J-41", manufactured by Nittobo Medical Co., Ltd., diallyldimethyl ammonium chloride-acrylamide copolymer, average molecular weight: 10,000
· Quaternary ammonium salt polymer B: trade name "PAS-J-81", manufactured by Nittobo Medical Co., Ltd., diallyldimethyl ammonium chloride-acrylamide copolymer, average molecular weight: 180,000
· Quaternary ammonium salt polymer C: trade name "EP1137, manufactured by Takamatsu Oil & Fat Co., Ltd.

Resin particle

· Urethane resin: trade name "SF-620", manufactured by DKS Co., Ltd.

Surfactant

· Acetylene glycol: trade name "Surfynol 485", manufactured by Nissin Chemical Industry Co., Ltd., HLB = 17

Preservative

· Proxel XL2: trade name manufactured by Lonza Ltd.

Treatment condition

In the tables, the drying temperature after coating of the pretreatment liquid composition (treatment liquid composition) and the drying temperature after ink printing are described as the surface temperature of the fabric in the heat drying treatment using a conveyer drying furnace "Economax D" (manufactured by M & R Company).

Evaluation items

A test of evaluating spray coating stability was performed by using a combination of "1008[+] Spray controller" manufactured by Spraying Systems Co., and a two fluid nozzle forming a flat spray pattern.
Also, pH was measured by immersing an electrode portion in the treatment liquid composition using desktop pH meter F-72 model (manufactured by Horiba, Ltd.).

4. 4. Evaluation method

The spray coating stability, color development, friction fastness, texture, and light stability were evaluated by evaluation tests. The evaluation methods are as follows.

4. 4. 1. Spray coating stability (two fluid nozzle)

Each of the treatment liquid compositions prepared as described above was uniformly coated on the surface of the fabric described above in "4. 3. Recording medium" by using a combination of "1008[+] Spray controller" manufactured by Spraying Systems Co., and a two fluid nozzle forming a flat spray pattern so that the coating amount per unit area was adjusted to 110 g/m2. In this case, a change in coating weight of the treatment liquid composition consumed within a coating treatment time was monitored, and the ability to spray a predetermined amount of consumption without nozzle clogging was evaluated as the spray coating stability. The spray coating stability is determined as follows.

Determination criteria

A: The rate of change in coating weight at the end of coating relative to the initial set value is less than ±10%.
B: The rate of change in coating weight at the end of coating relative to the initial set value is ±10% or more and less than 20%.
C: The rate of change in coating weight at the end of coating relative to the initial set value is ±20% or more.

4. 4. 2. Color development (black ink_100% Duty)

The fabric coated with the treatment liquid composition by the method described above was dried by heating at the drying temperature described in the tables for 7 minutes using conveyer drying furnace "Economax D" (manufactured by M & R Company), and the treatment of the fabric was completed. Then, an image was printed on the fabric by adhering the ink jet ink composition prepared as described above by an ink jet method using an ink jet printer (trade name "PX-G930" manufactured by Seiko Epson Corporation. In this case, a solid image was printed in a printing pattern (image) with a resolution of 1440 × 720 dpi within a printing range of 210 mm × 297 mm.

The "solid image" represents an image formed by recording dots in all pixels each of which was the minimum recording unit region specified by the recording resolution.

The fabric to which the ink jet ink composition had been adhered was dried by heating at 160°C for 5 minutes using conveyer drying furnace "Economax D" (manufactured by M & R Company), and then returned to 25°C, forming a printed matter.

The color development was evaluated by measuring the optical density (also referred to as the "OD value" hereinafter) of the image on the printed fabric using a fluorescence spectrodensitometer ("FD-7" manufactured by Konica Minolta Inc.). The determination is as follows.

Determination criteria

S: The OD value is 1.5 or more (particularly good).
A: The OD value is 1.4 or more and less than 1.5 (good).
B: The OD value is 1.25 or more and less than 1.4.
C: The OD value is less than 1.25.

4. 4. 3. Friction fastness (discoloration)

The dry and wet friction resistance of the fabric printed with DUTY 100% by the method described above was tested by a test method according to ISO105-X12 and determined according to criteria below. The wet and dry friction resistance was determined as an OD value difference due to discoloration before and after the friction resistance test according to the criteria below.

Determination criteria of dry friction strength

S: The OD value difference before and after the friction resistance test is less than 0.15 (extremely good).
A: The OD value difference before and after the friction resistance test is 0.15 or more and less than 0.20 (good).
B: The OD value difference before and after the friction resistance test is 0.20 or more and less than 0.25.
C: The OD value difference before and after the friction resistance test is 0.25 or more.

Determination criteria of wet friction strength

S: The OD value difference before and after the friction resistance test is less than 0.20 (extremely good).
A: The OD value difference before and after the friction resistance test is 0.20 or more and less than 0.25 (good).
B: The OD value difference before and after the friction resistance test is 0.25 or more and less than 0.30.
C: The OD value difference before and after the friction resistance test is 0.30 or more.

4. 4. 4. Texture (shear rigidity)

The shear rigidity of the fabric printed with DUTY 100% by the method described above was evaluated by using tensile shear tester KES-FB1-A manufactured by Kato Tech Co., Ltd. The texture was determined by using the value of shear rigidity according to the criteria below.

Determination criteria

S: The shear rigidity is less than 6.0 gf/cm·deg.
A: The shear rigidity is 6.0 gf/cm·deg or more and less than 8.0 gf/cm·deg.
B: The shear rigidity is 8.0 gf/cm·deg or more and less than 10.0 gf/cm·deg.
C: The shear rigidity is 10.0 gf/cm·deg or more.

4. 4. 5. Light resistance (yellowing)

The fabric coated with the treatment liquid composition and dried under the conditions described in "4. 4. 2. Color development (black ink_100% Duty)" was irradiated with xenon light with a cumulative irradiance of 20 MJ/m$^2$ using xenon weather meter XL75s manufactured by Suga Test Instruments Co., Ltd. The degree of discoloration of the pretreated fabric was derived as a color difference ΔEab by using fluorescence spectrodensitometer ("FD-7" manufactured by Konica Minolta Inc.). The fabric used for evaluation was the white cotton described above in "4. 3. Recording medium" and showing a L* value of 91.5. The light resistance was determined by using the color difference value according to criteria below.

A: The color difference is less than 2.0.
B: The color difference is 2.0 or more and less than 4.0.
C: The color difference is 4.0 or more.

4. 5. Evaluation results

The evaluation results are shown in above Table 1 and Table 2.
Comparison between the examples and the comparative examples indicates that both excellent color development and excellent wet friction fastness can be achieved by the treatment liquid composition, the set of the ink jet ink composition and the treatment liquid composition, and the recording method according to the embodiments of the present disclosure.
Comparison between Example 2 and Comparative Example 1 indicates that both excellent color development and excellent wet friction fastness can be achieved by using the specific quaternary ammonium salt polymer in place of a polyvalent metal salt.
Also, comparison between Example 2 and Comparative Examples 1 and 2 indicates that the treatment liquid composition according to the embodiment of the present disclosure causes little yellowing.
Comparison between Example 2 and Comparative Examples 3 and 4 indicates that both excellent color development and excellent wet friction fastness can be achieved by containing the polyamide epihalohydrin polymer and the specific quaternary ammonium salt polymer.
The results of Examples 1 to 3 indicate that both excellent color development and excellent wet friction fastness can be achieved by using various polyamide epihalohydrin polymers.
Also, the results of Examples 2, 4, and 5 indicate that both excellent color development and excellent wet friction fastness can be achieved by using various specific quaternary ammonium salt polymers.
The results of Examples 2 and 6 to 9 indicate that both excellent color development and excellent wet friction fastness can be achieved by using the polyamide epihalohydrin polymer contained in an amount within a predetermined wide range.

Also, the results of Examples 2 and 10 to 13 indicate that both excellent color development and excellent wet friction fastness can be achieved by using the specific quaternary ammonium salt polymer contained in an amount within a predetermined wide range.

Further, the results of Examples 2, 14, and 15 indicate that both excellent color development and excellent wet friction fastness can be achieved by using both the polyamide epihalohydrin polymer and the specific quaternary ammonium salt polymer in amounts within the respective predetermined wide ranges.

The results of Examples 2, 16, and 17 indicate that good spray coating stability can be maintained even when a predetermined amount of the water-insoluble component is contained.

The results of Examples 4 and 18 indicate that good color development is exhibited when the treatment liquid composition has lower pH.

The results of Examples 2, 19, and 20 indicate that the friction fastness can be more improved by crying the fabric at a predetermined temperature or more after coating of the treatment liquid composition.

Contents below can be derived from the embodiments described above.

According to an aspect, a treatment liquid composition contains a polyamide epihalohydrin polymer and a quaternary ammonium salt polymer other than the polyamide epihalohydrin polymer.

According to an aspect, a treatment liquid composition may be used by coating a fabric.

In the treatment liquid composition according to any one of the aspects, the L* value of the fabric may be 90 or more.

In the treatment liquid composition according to any one of the aspects, the pH of the treatment liquid composition may be less than 7.

The treatment liquid composition according to any one of the aspects may not contain over 1.0% by mass of a water-insoluble component relative to the total mass of the treatment liquid composition.

According to an aspect, a set of an ink jet ink composition and a treatment liquid composition is a set of an ink jet ink composition and the treatment liquid composition according to any one of the aspects described above. The ink jet ink composition is an aqueous pigment ink jet ink containing pigment particles and resin particles and having a pH of over 8, and the particle components contained have a volume-based average particle diameter of 20 to 500 nm.

In the set of the ink jet ink composition and the treatment liquid composition according to an aspect, the particle components may have anionicity.

According to an aspect, a treatment method includes adhering the treatment liquid composition according to any one of the aspects to a fabric, and heating the fabric to which the treatment liquid composition has been adhered, the surface temperature of the fabric in the heating being 100°C or more.

**Claims**

1. A treatment method comprising:

    adhering a treatment liquid composition to a fabric;
    the treatment liquid composition comprising:

        a polyamide epihalohydrin polymer; and
        a quaternary ammonium salt polymer other than the polyamide epihalohydrin polymer;

    and
    heating the fabric to which the treatment liquid composition has been adhered,
    wherein in the heating, the surface temperature of the fabric is 100°C or more.

2. The treatment method according to claim 1, wherein the composition is coated on the fabric.

3. The treatment method according to claim 2, wherein the L* value of the fabric is 90 or more.

4. The treatment method according to claim 1, wherein the pH of the treatment liquid composition is less than 7.

5. The treatment method according to claim 1, wherein over 1.0% by mass of a water-insoluble component is not contained relative to the total mass of the treatment liquid composition.

**6.** The treatment method according to any preceding claim, wherein

the method comprises adhering a set of an ink jet ink composition and a treatment liquid composition comprising an ink jet ink composition and the treatment liquid composition according to claim 1,
wherein the ink jet ink composition is an aqueous pigment ink jet ink containing pigment particles and resin particles;
the pH of the ink composition exceeds 8; and
the particle components contained have a volume-based average particle diameter of 20 to 500 nm.

**7.** The treatment method according to claim 6, wherein the particle components have anionicity.

**Patentansprüche**

**1.** Behandlungsverfahren, umfassend:

Anheften einer Behandlungsflüssigkeitszusammensetzung an ein Gewebe;
wobei die Behandlungsflüssigkeitszusammensetzung umfasst:

ein Polyamidepihalohydrinpolymer; und
ein quaternäres Ammoniumsalzpolymer, das nicht das Polyamidepihalohydrinpolymer ist;

und
Erhitzen des Stoffs, an den die Behandlungsflüssigkeitszusammensetzung angeheftet wurde,
wobei beim Erhitzen die Oberflächentemperatur des Stoffs 100 °C oder mehr beträgt.

**2.** Behandlungsverfahren nach Anspruch 1, wobei die Zusammensetzung auf den Stoff aufgetragen wird.

**3.** Behandlungsverfahren nach Anspruch 2, wobei der L*-Wert des Stoffs 90 oder mehr ist.

**4.** Behandlungsverfahren nach Anspruch 1, wobei der pH-Wert der Behandlungsflüssigkeitszusammensetzung kleiner als 7 ist.

**5.** Behandlungsverfahren nach Anspruch 1, wobei über 1,0 Masseprozent einer wasserunlöslichen Komponente relativ zu der Gesamtmasse der Behandlungsflüssigkeitszusammensetzung nicht beinhaltet ist.

**6.** Behandlungsverfahren nach einem vorstehenden Anspruch, wobei

das Verfahren Anheften eines Satzes einer Tintenstrahltintenzusammensetzung und einer Behandlungsflüssigkeitszusammensetzung, umfassend eine Tintenstrahltintenzusammensetzung und die Behandlungsflüssigkeitszusammensetzung nach Anspruch 1, umfasst,
wobei die Tintenstrahltintenzusammensetzung eine wässrige Pigmenttintenstrahltinte ist, die Pigmentpartikel und Harzpartikel beinhaltet;
der pH-Wert der Tintenzusammensetzung 8 übersteigt; und
die beinhalteten Partikelkomponenten einen auf dem Volumen basierten durchschnittlichen Partikeldurchmesser von 20 bis 500 nm aufweisen.

**7.** Behandlungsverfahren nach Anspruch 6, wobei die Partikelkomponenten Anionizität aufweisen.

**Revendications**

**1.** Procédé de traitement comprenant :

l'adhérence d'une composition de liquide de traitement sur un tissu ;
la composition de liquide de traitement comprenant :

un polymère de polyamide épihalohydrine ; et

un polymère de sel d'ammonium quaternaire autre que le polymère de polyamide épihalohydrine ;

et

le chauffage du tissu sur lequel la composition de liquide de traitement a été adhérée, dans lequel, dans le chauffage, la température de surface du tissu est de 100 °C ou plus.

2. Procédé de traitement selon la revendication 1, dans lequel la composition est appliquée sur le tissu.

3. Procédé de traitement selon la revendication 2, dans lequel la valeur L* du tissu est de 90 ou plus.

4. Procédé de traitement selon la revendication 1, dans lequel le pH de la composition de liquide de traitement est inférieur à 7.

5. Procédé de traitement selon la revendication 1, dans lequel plus de 1,0 % en masse d'un composant insoluble dans l'eau n'est pas contenu par rapport à la masse totale de la composition de liquide de traitement.

6. Procédé de traitement selon l'une quelconque des revendications précédentes, dans lequel

le procédé comprend en outre l'adhérence d'un ensemble d'une composition d'encre pour jet d'encre et d'une composition de liquide de traitement, comprenant une composition d'encre pour jet d'encre et la composition de liquide de traitement selon la revendication 1,
dans lequel la composition d'encre pour jet d'encre est une encre pour jet d'encre à pigments aqueux contenant des particules de pigment et des particules de résine ;
le pH de la composition d'encre est supérieur à 8 ; et
les composants de particules contenus présentent un diamètre de particule moyen basé sur le volume de 20 à 500 nm.

7. Procédé de traitement selon la revendication 6, dans lequel les composants de particules présentent une anionicité.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021108747 A
- JP 2021020394 A
- US 6001137 A

**Non-patent literature cited in the description**

- **MINORU FUJITA**. Systematic Organic Qualitative Analysis (mixture part). Kazama Shobo Co., Ltd., 1974
- **NOBUHIKO KUROKI**. Theoretical Chemistry of Dyeing. Maki Shoten, 1966
- **HIROO INOUE**. Organic Compound Separation Method. Shouka-bo, 1990